# EUROPÄISCHE PATENTSCHRIFT

(11) **EP 0 841 743 B1**
(45) Veröffentlichungstag und Bekanntmachung des Hinweises auf die Patenterteilung: **12.11.2003**
(21) Anmeldenummer: 97118121.9
(22) Anmeldetag: 18.10.1997
(51) Int. Cl.: H02P 3/04, B66D 1/58

(54) **Steuerungsanordnung zur Notabschaltung**
Control device for an emergency stop
Dispositif de commande pour arrêt d'urgence

(30) Priorität: 07.11.1996 DE 19645811
(43) Veröffentlichungstag der Anmeldung: 13.05.1998
(73) Patentinhaber: R. Stahl Fördertechnik GmbH, 74653 Künzelsau (DE)
(72) Erfinder: Thürmer, Falk, 74653 Künzelsau (DE)
(74) Vertreter: Patentanwälte Rüger, Barthelt & Abel

(56) Entgegenhaltungen:
- EP-A- 0 557 570
- DE-A- 2 058 712
- DE-A- 2 930 439
- DE-A- 3 020 480
- PATENT ABSTRACTS OF JAPAN vol. 018, no. 440 (M-1657), 17. August 1994 & JP 06 135682 A (MITSUBISHI HEAVY IND LTD), 17. Mai 1994

## Beschreibung

Bei Hebezeugen können für Menschen und Material extrem gefährliche Situationen eintreten, wenn beim Hochfahren des Hebezeugs der Haken oder die daran hängende Last an irgendwelchen ortsfesten Teilen hängen bleiben. Der Vorgang geht schlagartig schnell und die Reaktionszeit des Kranführers reicht nicht aus zu verhindern, daß dadurch dramatische Überlastungen des Systems entstehen. Aus diesem Grunde ist das Hebezeug mit Sensoren und einer Steuereinrichtung ausgestattet, die selbsttätig die Hubbewegung stillsetzen soll, sobald eine solche Gefahr erkannt wird.

Je länger die Reaktionszeit des Systems insgesamt ist, d.h. je mehr Zeit vergeht zwischen dem Erkennen, daß eine bestimmte Lastgrenze überschritten wird, und dem Stillstand des Antriebsmotors, umso größer ist die nach dem Überschreiten der Lastgrenze auftretende zusätzliche Krafterhöhung. Genauere Betrachtungen zeigen, daß bei der Normalhubgeschwindigkeit die größte Energie des Systems als kinetische Energie im Anker des Antriebsmotors gespeichert ist. Die dort nach dem Abschalten des Motorstroms enthaltene Energie beträgt bis zu 80% der kinetischen Gesamtenergie im System.

Bei der Notabschaltung infolge des Hägenbleibens der Last kann jedoch die kinetische Energie nicht in potentielle Energie der Last umgesetzt werden. Damit dennoch die Kraft in dem Seil möglichst wenig steigt, muß die kinetisch Energie so schnell wie möglich mittels der Bremse in Wärme umgesetzt werden.

Aus der DE-20 58 712 C3 ist eine Überlastsicherung für ein Hebezeug bekannt, die lediglich beim Anheben der Last von der Unterlage wirksam ist. Wenn der Kranführer oder Bediener des Hebezeugs die Last mit der Haupthubgeschwindigkeit vom Boden anheben will, fährt das Hebezeug zunächst mit der Nennhubgeschwindigkeit, um das Seil schnell zu straffen. Sobald die Messeinrichtung an dem Hebezeug eine Seilkraft von etwa 20% der Nennlast feststellt, wird selbsttätig aus dem Hauptgang in den Feingang umgeschaltet und die Haupthubgeschwindigkeit gesperrt. Die Sperrung der Haupthubgeschwindigkeit bleibt solange vorhanden, bis sichergestellt ist, daß keine Überlastung des Hebezeugs vorliegt. Sollte während des Anhebens der Last ein Verhaken auftreten oder die Last schwerer sein als die zulässige Nennlast, übersteigt die Seilkraft einen zweiten Grenzwert, der etwa bei 110% der Nennlast liegt, und es wird das Hebezeug abgeschaltet. Es kann anschließend nur noch in Richtung Senken in Bewegung gesetzt werden.

EP-A-0 557 570 offenbart ein Antriebs- und Steuersystem für ein ein Lastaufnahmemittel aufweisendes Hebezeug,
mit einem Antriebsmotor zum Bewegen des Lastauf-nahmemittels , der mit wenigstens zwei unterschiedlichen Drehzahlen betreibbar ist,
mit einer Stromversorgungseinrichtung für den Antriebsmotor, durch die der Antriebsmotor mit den unterschiedlichen Drehzahlen in Gang zu setzen oder abzuschalten ist und die Steuereingänge aufweist,
mit einer Sensoreinrichtung, um die an dem Lastaufnahmenmittel wirkende Kraft zu erfassen und ein die Größe der Kraft kennzeichnendes Signal abzugeben,
mit einer Eingabeeinrichtung zum Eingeben einer Sollhubgeschwindigkeit und
mit einer an die Eingabeeinrichtung angeschlossenen Steuerschaltung,
   in die das Signal aus der Sensoreinrichtung eingespeist wird,
   die Steuersignale an die Steuereingänge der Stromversorgungseinrichtung abgibt und
   die ein Steuerprogramm enthält, das derart gestaltet ist, daß
   es das die Größe der Kraft kennzeichnende Signal mit einem einer Überlast entsprechenden Grenzwert vergleicht, und
   beim Überschreiten des Grenzwertes die Stromversorgungseinrichtung
   in den Zustand für der niedrigere Drehzahl schaltet.

Durch die Verwendung des Feinhubs nach dem Seilstraffen können dramatische Überlastungen des Hebezeugs beim Anfahren der Last vermieden werden, weil die kinetisch Energie klein ist. Sollte aber die Last sich während der Hubbewegung verhaken, arbeitet die Maschine mit der Haupthubgeschwindigkeit d.h. bei hoher Geschwindigkeit, womit die oben geschilderten Probleme auftreten.

Das aus der DE-29 30 439 C2 bekannte Verfahren zur Steuerung eines Hebezeugs verwendet die zeitliche Ableitung der Seilkraft, um festzustellen, ob beim Anheben der Last eine Überlastung auftreten kann. Sobald der Anstieg der Seilkraft zu groß ist, wird beim Anheben in den Feingang umgeschaltet.

Ein System, das mit einer zeitlichen Ableitung arbeitet, ist gegenüber Störungen sehr empfindlich, und zwar sowohl gegenüber Störungen, die scheinbar einen zu schnellen Anstieg simulieren als auch Störungen, die die gegenteilige Richtung simulieren.

Ausgehend hiervon ist es Aufgabe der Erfindung, ein Antriebs- und Steuersystem für Hebezeuge zu schaffen, das in der Lage ist, extrem schnell anzuschalten, wenn sich während des Anhebens der Haken oder die Last verhängen.

Diese Aufgabe wird erfindungsgemäß durch das Antriebsund Steuersystem mit den Merkmalen des Anspruches 1 gelöst.

Bei dem neuen System wird ein gleitender Grenzwert verwendet, der lediglich von der Last abhängig ist. Er setzt sich zusammen aus einem Wert proportional zu der Größe der Last zuzüglich eines Inkrementalwerts. Hierdurch können Storungen, z.B. Ungleichförmigkeiten im Getriebelauf und dgl., die bei der Verwendung des Differentialquotienten zu Fehlsteuerungen führen würden, das System nicht irritieren. Außerdem ist das neue System nicht nur während des Abhebens der Last vom Boden wirksam, sondern vor allen Dingen auch bei schwebender Last insofern, als es sich dynamisch selbst den neuen Grenzwert sucht, ab dem aus die Haupthubgeschwindigkeit in den Feingang umgeschaltet wird.

Das Umschalten aus der Haupthubgeschwindigkeit in den Feingang nutzt die Tatsache aus, daß der Motor dadurch selbst als elektrische Bremse herangezogen werden kann und die kinetische Energie des Ankers nicht nur in der mechanischen Bremse umgesetzt wird. Ohne Veränderung der Dimensionierung des mechanischen Bremsteils wird dadurch der Anhalteweg wesentlich verkürzt. Ein kürzerer Anhalteweg bedeutet, daß durch die Rotation des Ankers das Seil weniger stark gestrafft wird, bzw. nach dem Abschalten des Hubwerks weniger stark ansteigt.

Außerdem eignet sich dieses System dazu, Schwingungen der freihängenden Last zu erkennen und regelungstechnisch einzugreifen, falls die Schwingungen eine vorgegebene Schranke überschreiten, beispielsweise weil der Bediener das Hebezeug im Tippbetrieb fährt und sich demzufolge die Schwingungen, die mit Eigenfrequenz auftreten, durch den Tippbetrieb angefacht werden.

Der gleitende Grenzwert läßt sich sehr einfach erzeugen, indem das Lastsignal gemessen und zeitlich geglättet wird. Dadurch wird ein mit der Last veränderlicher Wert erhalten, der sich so langsam ändert, daß er als Referenzwert dienen kann. Durch die kurzfristigen Schwankungen infolge der schwingenden Hakenlast wird der Grenzwert nur unwesentlich beeinflusst.

Zusätzlich kann der Inkrementalwert, um den der lastproportionale Wert jeweils erhöht wird, abhängig von derjenigen Zeit sein, seit der zuletzt ein Schaltvorgang vorgenommen wurde. Hierdurch wird verhindert, daß bei einem Umschalten aus dem Feingang in den Hauptgang bzw. umgekehrt Mitkopplungen entstehen, die die Steuerung irritieren. Beispielsweise kann beim automatischen Zurückschalten in den Feingang nach dem Losreißen der Last der Inkrementalwert für eine festgelegte Zeit erhöht werden, damit die Lastschwingungen, die durch das nachfolgende selbsttätige Hochschalten in die Haupthubgeschwindigkeit hervorgerufen werden, nicht erneut zu einem Zurückschalten in den Feingang führen.

Der Bremsweg läßt sich weiter verkürzen, wenn das Hebezeug mit einer mechanischen Bremse versehen ist, deren Betätigung mechanisch von dem Antriebsmotor unabhängig ist. Bei einem solchen Antriebskonzept wird es möglich, gleichzeitig die Bremse einzurücken und vom Hauptgang in den Feingang zurückzuschalten. Dies ermöglicht das gleichzeitige mechanische und elektrische Abbremsen und damit eine weitere Verkürzung des Anhaltewegs des Hubwerks.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 einen Seilzug gemäß der Erfindung, in einer perspektivischen Schemazeichnung,
Fig. 2 das elektrische Blockschaltbild für die Steuerungseinrichtung des Seilzugs nach Fig. 1 und
Fig. 3 einen Ausschnitt aus einem Flussdiagramm des Steuersystems nach Fig. 2,
Fig. 4 bis 7 Diagramme zur Veranschaulichung des Kraftverlaufs und der Änderung der Motordrehzahl,
Fig. 8 einen Ausschnitt aus einem Flussdiagramm zur Erzeugung des gleitenden Referenzwerts beim Anheben der last und
Fig. 9 ein Diagramm zur Veranschaulichung des Kraftverlaufs und der Änderung des variablen Referenzwerts mit der Zeit.

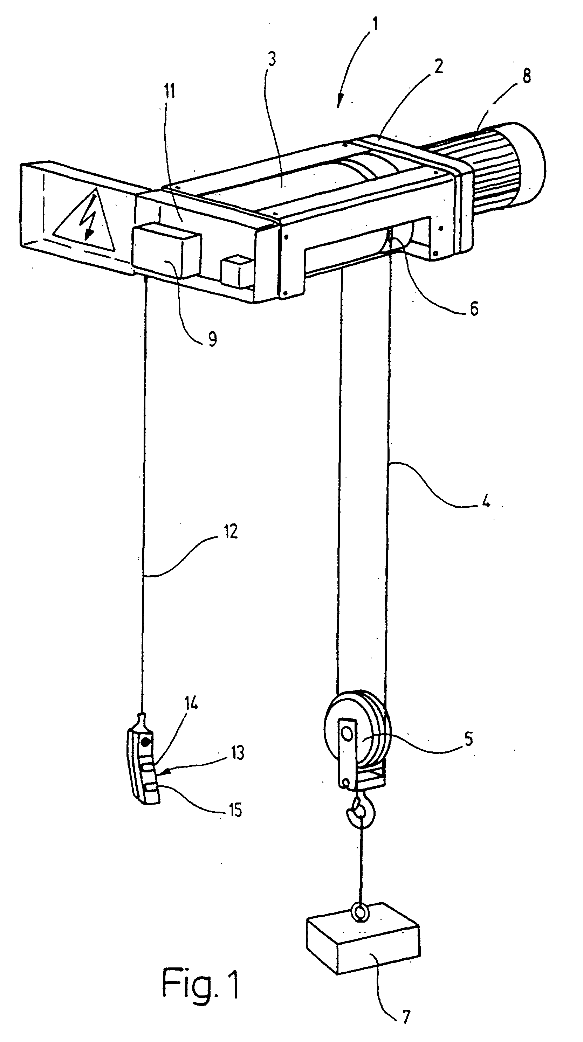

Fig. 1 zeigt in einer schematischen perspektivischen Darstellung einen Seilzug 1 mit einer in einem Rahmen 2 gelagerten Seiltrommel 3. Von der Seiltrommel 3 läuft ein Seil 4 ab, das zu einer Hakenflasche 5 und von dort zurück zu einer Verankerungsstelle 6 in dem Rahmen führt. An der Hakenflasche 5 hängt eine Last 7.

Um die Seiltrommel 3 in Umdrehungen zu versetzen, ist an dem Rahmen 2 ein Elektromotor 8 angeflanscht, der vorzugsweise ein Drehstrommotor mit Kurzschlussläufer ist. Die Steuerung des Motors 8 geschieht über eine schematisch angedeutete Steuerungsanordnung 9, die in einem aufgeklappt gezeichneten Steuerkasten 11 untergebracht ist. An der Steuerungsanordnung 9 ist über ein Hängekabel 12 ein Handschalter oder Hängetaster 13 angeschlossen, der als Eingabeeinrichtung dient.

Der Hängetaster 13 weist zwei handbetätigte Drucktaster 14 und 15 auf, die dazu dienen, die Bewegung der Seiltrommel 3 zu steuern. Beispielsweise wird durch leichtes Niederdrücken des Drucktasters 14 bis zu einem Druckpunkt die Seiltrommel 3 im Sinne eines Anhebens der Last 7 mit einer langsamen Geschwindigkeit (Feingang) in Gang gesetzt. Wird der Drucktaster 14 über den Druckpunkt hinaus betätigt, erfolgt das Anheben der Last 7 mit einer erhöhten Geschwindigkeit (Haupthubgeschwindigkeit). Sinngemäß dasselbe gilt für den Drucktaster 15, der die Abwärtsbewegung steuert.

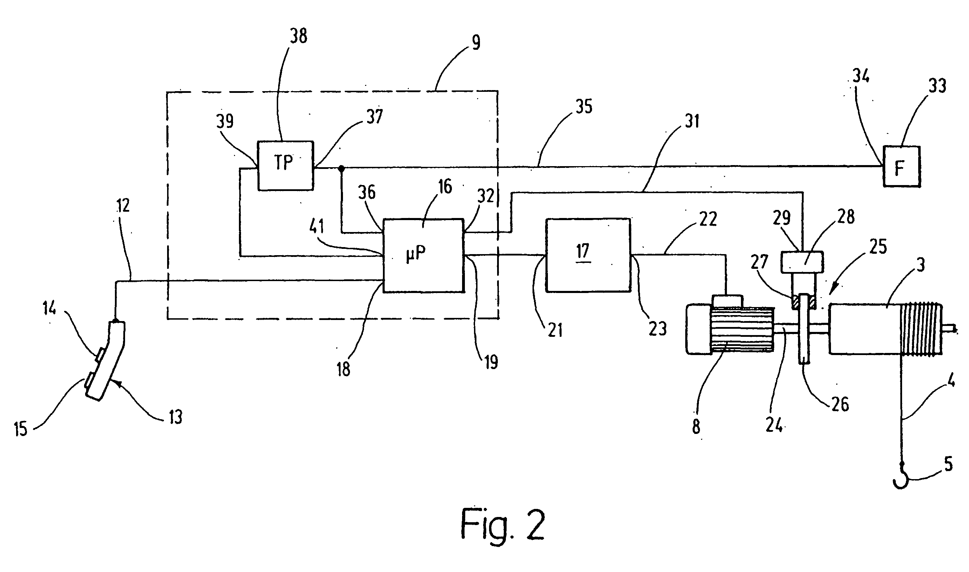

Wie Fig. 2 zeigt, basiert die Steuerungsanordnung 9 auf einem Mikroprozessor 16, d.h. mit den Drucktastern 14 und 15 werden nicht unmittelbar Motorschütze gesteuert, sondern die von diesen Drucktastern 14, 15 kommenden Signale gelangen in den Mikroprozessor 16, der seinerseits entsprechend Schalt- oder Motorschütze einer Stromversorgung 17 ansteuert. Der Mikroprozessor 16 übernimmt die gesamte Funktionsüberwachung des Hebezeugs 1.

Die Stromanschlüsse zum Netz bzw. die Stromversorgung für den Mikroprozessor 16 sind in Fig. 2 der Übersichtlichkeit halber nicht dargestellt, da sie zum Verständnis der Erfindung nichts beitragen.

An einen Eingang 18 des Mikroprozessors 16 ist über das Steuerkabel 12 der Hängeschalter 13 angeschlossen. Ein Ausgang 19 des Mikroprozessors 16 ist mit einem Steuereingang 21 der Stromversorgungseinrichtung 17 verbunden. Diese umfaßt im einfachsten Falle Motorschütze, um den Antriebsmotor 8, der über Leitungen 22 mit einem Ausgang 23 der Stromversorgungseinrichtung 17 verbunden ist, wahlweise in den beiden Drehrichtungen mit unterschiedlichen Drehzahlen in Gang zu setzen. Der Antriebsmotor 8 ist ein polumschaltbarer Drehstrommotor mit Kurzschlussläufer, der die Eigenschaft besitzt, beim Umschalten von der niedrigen Polzahl auf die hohe Polzahl, also beim Umschalten von der hohen Drehzahl auf die niedrige Drehzahl elektrisch zu bremsen.

Anstelle der Kombination von Schaltschützen und einem polumschaltbaren Asynchronmotor kann auch ein Frequenzumrichter in Verbindung mit einem Drehstromasynchronmotor mit fester Polpaarzahl eingesetzt werden. Beim Zurückregeln der Motordrehzahl entsteht dieselbe Bremswirkung, wenn der Frequenzumrichter entsprechend aufgebaut ist. Dabei wird entweder die Energie in das Stromnetz zurückgespeist oder in Bremswiderständen vernichtet.

Eine Ankerwelle 24 des Antriebsmotors 8 ist mit einer mechanischen Bremseinrichtung 25 gekuppelt und treibt die Seiltrommel 3 über ein in der Seiltrommel 3 untergebrachtes Planetengetrieb.

Zu der mechanischen Bremseinrichtung 25 gehören eine drehfest mit der Ankerwelle 24 gekuppelte Bremsscheibe 26 sowie zangenartig an dieser angreifende Bremsbacken 27, die über eine schematisch angedeutete Betätigungseinrichtung 28 an die Bremsscheibe 26 angelegt werden können bzw. mit deren Hilfe die Bremsbacken 27 gelüftet werden können. Die Bremsbetätigungseinrichtung 28 weist einen Steuereingang 29 auf, der über eine Leitung 31 mit einem Ausgang 32 des Mikroprozessors 16 verbunden ist.

Um zu verhindern, daß eine mechanische Überlastung des Hebezeugs 1 zufolge einer zu großen Hakenlast zustandekommt, ist ein Seilkraftsensor 33 vorgesehen, der ein der Seilkraft proportionales elektrisches Signal an seinem Ausgang 34 abgibt.

Der Seilkraftsensor 33 kann in unterschiedlicher Form ausgeführt sein. Es kann eine Kraftmessdose sein, die an dem festen Verankerungspunkt 6 zwischen dem Zugseil 4 und dem Rahmen 2 angeordnet ist. Der Seilkraftsensor 33 kann aber auch in der Aufhängung des Hebezeugs 1 angeordnet sein, um das Gewicht des Hebezeugs 1 zusammen mit der daran hängenden Last zu messen bzw. zu wiegen. Schließlich ist es auch denkbar, als Seilkraftsensor 33 eine Kraftmesseinrichtung einzusetzen, die eine Axialkraft an einer Achse innerhalb des Untersetzungsgetriebes zwischen dem Antriebsmotor 8 und der Seiltrommel 3 misst und davon Gebrauch macht, daß bei schräg verzahnten Zahnrädern eine von dem übertragenen Drehmoment abhängige Axialkraft entsteht. In allen Fällen liefert der Seilkraftsensor 33 an seinem Ausgang 34 ein Signal, das für den Wert der Last 7, die an dem Haken 5 hängt, kennzeichnend ist. Genau gesagt enthält der Wert auch das variable Gewicht des ausgefahrenen Seils, das jedoch für gewöhnlich vernachlässigt werden kann. Dieses elektrische Signal gelangt über eine Verbindungsleitung 35 unmittelbar und damit praktisch ungesiebt und unverzögert in einen Eingang 36 des Mikroprozessors 16 und außerdem in einen Eingang 37 eines Tiefpassfilters 38. Das Tiefpassfilter 38 ist mit seinem Ausgang 39 an einen weiteren Eingang 41 des Mikroprozessors 16 angeschlossen.

Lediglich um den wesentlichen Gedanken der Erfindung besser bereits in der Figur sichtbar zu machen, ist der Tiefpass 38 als separater Schaltungsblock veranschaulicht. In der Praxis ist der Tiefpass 38 ein entsprechendes Programmstück innerhalb des Mikroprozessors 16. Mit seiner Hilfe soll ein gleitender Grenzwert erzeugt werden, dessen Größe von dem Gewicht der an dem Haken 5 hängenden Last abhängig ist. Das von dem Tiefpass 38 abgegebene Signal ist zeitlich geglättet. Es ist z.B ein Mittelwert über einen Zeitraum, der lang ist, verglichen mit der Periodendauer der Eigenfrequenz der am Haken hängenden und schwingenden Last.

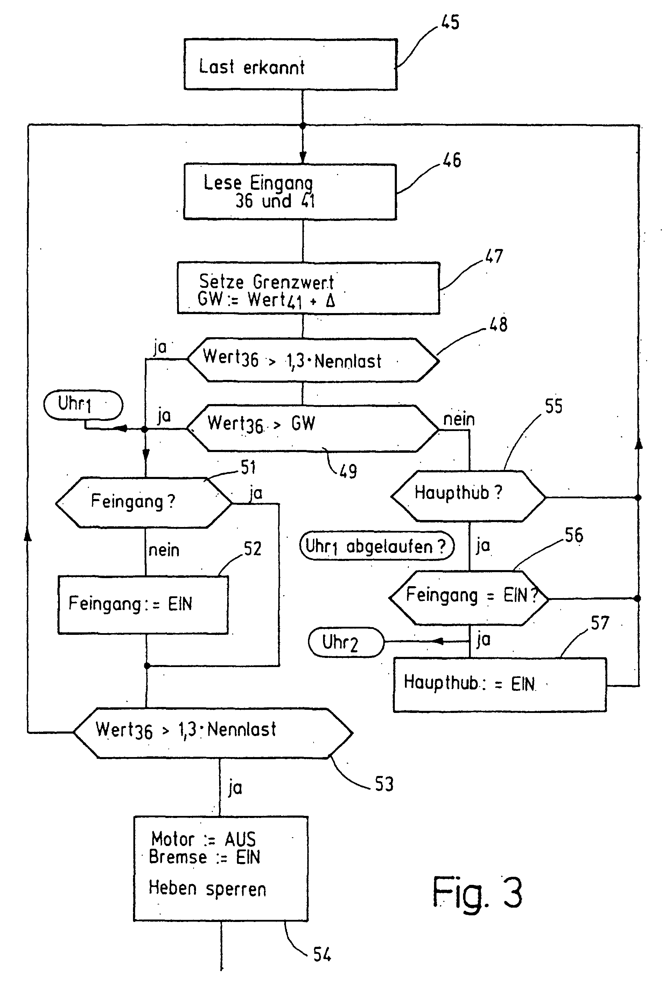

Fig. 3 veranschaulicht in Gestalt eines Flussdiagramms jenen Programmteil, der in dem Mikroprozessor 16 abläuft und dafür sorgt, Überlastungen infolge zu großer Hakenlast zu vermeiden.

Der in Fig. 3 gezeigte Programmausschnitt wird in kurzen Zeitabständen von Millisekunden immer wieder durchlaufen.

Der Programmabschnitt wird frühestens durchlaufen, nachdem nach dem Abheben der Last 7 von der Unterlage das System eingeschwungen ist. Dieser Zeitpunkt ist erreicht, wenn der Mikroprozessor 16 bei 45 erkannt hat, daß die Last 7 am Haken 5 schwebt. Dieser Zeitpunkt ist etwa gleichbedeutend mit dem Einschwingen des Tiefpasses 38, so daß an dem Eingang 41 des Mikroprozessors 16 ein geglättetes Mittelwertsignal ansteht, dessen Größe dem Gewicht der Last 7 entspricht. Die Glättung mit Hilfe des Tiefpasses 38 ist notwendig, um gleichzeitig eine Speicherung zu erhalten, damit das Signal an dem Eingang 41 als lastabhängiger Referenzwert verwendet werden kann.

Im Anschluss an das Erkennen der Last 7 bei 45 übernimmt der Mikroprozessor 16 bei 46 die an den Eingängen 36 und 41 anstehenden Werte. Bei 47 wird aus dem Wert an dem Eingang 41 der Grenzwert GW berechnet, der sich zusammensetzt aus dem gemessenen Mittelwert und einem Inkrementalwert Δ. Δ liegt bei etwa 5% der Nennlast, für die das Hebezeug 1 dimensioniert ist.

Wie bereits erwähnt, ist der Wert an dem Eingang 41 ein durch zeitliche Glättung oder Siebung erhaltener integrierter Mittelwert, der nur noch verhältnismäßig sehr langsam schwankt, jedenfalls nicht in der Lage ist, Schwingungen zu folgen, die entstehen, wenn die an dem Haken 5 hängende Last 7 infolge von Einschalt- oder Ausschaltstößen vertikal auf- und abschwingt, was an dem Seilkraftsensor 33 scheinbar zu periodischen Gewichtsänderungen führt. Diese Schwingungen klingen exponentiell ab und ihr Mittelwert entspricht exakt dem Gewicht der Last 7.

Nachdem solchermaßen bei 47 ein Grenzwert GW festgelegt wird, der von dem Gewicht der aktuell an dem Haken 5 hängenden Last 7 abhängig ist, wird bei 48 überprüft, ob der Wert an dem Eingang 36 größer ist als das 1,3-fache der Nennlast des Hebezeugs 1. Diese Abprüfung ist zweckmäßig, damit unmittelbar das Bremsprogramm gestartet wird, falls aufgrund ungünstiger Konstellationen der Grenzwert GW größer sein sollte als das 1,3-fache der Nennlast; andernfalls müßte diese Relation überprüft werden.

Im Regelfall wird die Bedingung bei 48 nicht erfüllt sein, weshalb bei 49 die Prüfung erfolgt, ob der Wert an dem Eingang 36, also der Momentanwert, der vom Seilkraftsensor 33 erfasst wird, den Grenzwert GW übersteigt. Das Signal an dem Eingang 36 ist praktisch ungefiltert und damit in der Lage, den Seilkraftschwingungen zu folgen. Beim Schwingen der Last 7 an dem Seil 4 können kurzfristig Amplitudenspitzen auftreten, die über dem Wert von GW liegen. In einem solchen Fall wird die Bedingung bei 49 vorübergehend erfüllt. Sie wird aber auch erfüllt, wenn sich während des Hubvorgangs die Last 7 an irgendwelchen ortsfesten Teilen verhakt.

Übersteigt der Wert an dem Eingang 36 den Grenzwert GW wird bei 51 überprüft, ob das Hebezeug bereits mit der Feinhubgeschwindigkeit arbeitet. Falls nein, wird bei 52 über den Ausgang 19 die Stromversorgungseinrichtung 17 veranlasst, in die Feinhubgeschwindigkeit umzuschalten. Diese Anweisung wird übersprungen, falls die Feinhubgeschwindigkeit bereits aus anderen Gründen vorliegt. Wenn die anschließende Prüfung bei 53 negativ ausfällt, wird an den Eingang des Anweisungsblocks 46 zurückgekehrt. Der negative Ausgang der Prüfung bei 53 bedeutet, daß die Hakenlast nach wie vor kleiner ist als die zulässige Grenzlast, bei der der Motor 8 umgehend stillgesetzt werden muß.

Sollte hingegen die Prüfung bei 53 positiv ausfallen, bedeutet dies, daß an dem Seil 4 mit einer Kraft gezogen wird, die größer ist als die Nennlast, für die das Hebezeug 1 dimensioniert ist. Danach wird bei dem Anweisungsblock 54 fortgefahren und der Steuereinrichtung 17 der Befehl erteilt, den Motorstrom abzuschalten und die Bremse 25 zu aktivieren. Ferner wird die Möglichkeit, im Hubbetrieb fortzufahren, gesperrt. Es kann anschließend nur noch die Taste 15 für den Senkbetrieb erfolgreich betätigt werden.

Wenn bei der Überprüfung der Seilkraft an der Verzweigungsstelle 49 der aktuelle Wert der Seilkraft kleiner ist als der Grenzwert GW, verzweigt das Programm zu einer Abfrage 55, an der überprüft wird, ob der Bediener des Hebezeugs 1 die Haupthubgeschwindigkeit angefordert hat. Falls nein, kehrt das Programm zu dem Eingang des Anweisungsblocks 46 zurück, falls ja, erfolgt als nächstes bei 56 die Abfrage, ob aufgrund einer vorherigen zwangsweisen Umschaltung im linken Ast des Programms bei dem Anweisungsblock 52 auf die Feinhubgeschwindigkeit umgeschaltet wurde, wenn ja, erfolgt im Anweisungsblock 57 die Anweisung an die Stromversorgungseinrichtung 17, den Haupthubbetrieb wiederum einzuschalten. Anschließend kehrt das Programm an den Eingang des Anweisungsblocks 56 zurück.

Ersichtlicherweise gabelt sich bei 49 das Programm, und zwar abhängig davon, ob infolge von Lastschwingungen oder einem Verhaken der Last 7 der aktuelle Grenzwert GW überschritten wird. Trifft diese Bedingung zu, wird zwangsweise das Hebezeug 1 bei 52 in die Feinganggeschwindigkeit umgeschaltet, und zwar vollkommen unabhängig davon, welche Hebegeschwindigkeit der Benutzer anfordert oder angefordert hat. Durch das Umschalten in die Feinganggeschwindigkeit wird ein wesentlicher Teil der kinetischen Energie, die im Anker des Motors 8 gespeichert ist, bereits elektrisch in Wärme umgesetzt. Dieser Bremsvorgang ist extrem schnell, so daß, wenn bei weiteren Durchläufen erkannt wird, daß auch die absolute Grenze entsprechend dem 1,3-fachen der Nennlast überschritten wird, nur noch die sehr viel geringere kinetische Energie entsprechend der Feinganggeschwindigkeit mechanisch herausgebremst werden muß. Bei gleicher Dimensionierung wird also der Motor 8 nach dem Einfallen der Bremseinrichtung 25 sehr viel schneller zum Stillstand kommen und entsprechend sehr viel weniger nach dem Abschalten des eigentlichen Motorbetriebs das verhakte Seil spannen.

Diese dramatische Situation tritt hingegen nicht ein, wenn das System ins Schwingen geraten ist. Diese Schwingungen sind nach einer bestimmten Zeit abgeklungen und das Programm wird bei einem der weiteren Durchläufe bei 49 in den rechten Ast verzweigen und entsprechend dem Wunsch des Benutzers entweder mit der Feinhubgeschwindigkeit fortfahren oder selbsttätig in die Haupthubgeschwindigkeit umschalten.

Aus Sicherheitsgründen kann es angeraten sein, zwei zusätzliche Zeitglieder Uhr₁ und Uhr₂ zu verwenden. Die Uhr₁ wird gestartet, jedesmal wenn in den linken Ast verzweigt wurde. Das Ablaufen der Uhr₁ wird z.B. zwischen 55 und 56 überprüft. Hierdurch wird sichergestellt, daß das Programm nach dem Anfachen einer Schwingung und dem Zurückkehren in den rechten Ast lange genug wartet, ehe in die schnelle Geschwindigkeit zurückschaltet wird. Die Schwingungen sind dann mit Sicherheit abgeklungen.

Das Zurückschalten in die Haupthubgeschwindigkeit kann in dem System mechanische Schwingungen auslösen. Unter Umständen ist zu erwarten, daß diese Schwingungen eine Amplitude haben, die kurzfristig größer als der alte Wert von GW werden. Dadurch soll aber das System keinesfalls wieder in die Feinhubgeschwindigkeit zurückfallen. Andererseits soll das System im eingeschwungenen Zustand möglichst sensibel sein und möglichst schnell ein Verhaken der Last 7 erkennen können. Dies wird erreicht, indem nach der Abfrage bei 56 eine zweite Uhr₂ gestartet wird.

Mit Hilfe der zweiten Uhr₂ kann für eine entsprechende Zeitspanne, die der Dauer des Abklingvorgangs der angefachten Schwingung beim Umschalten in die Haupthubgeschwindigkeit entspricht, mit einem größeren Δ-Wert gearbeitet werden.

In den nachfolgenden Figuren sind die Auswirkungen des oben beschriebenen Programms dargestellt.

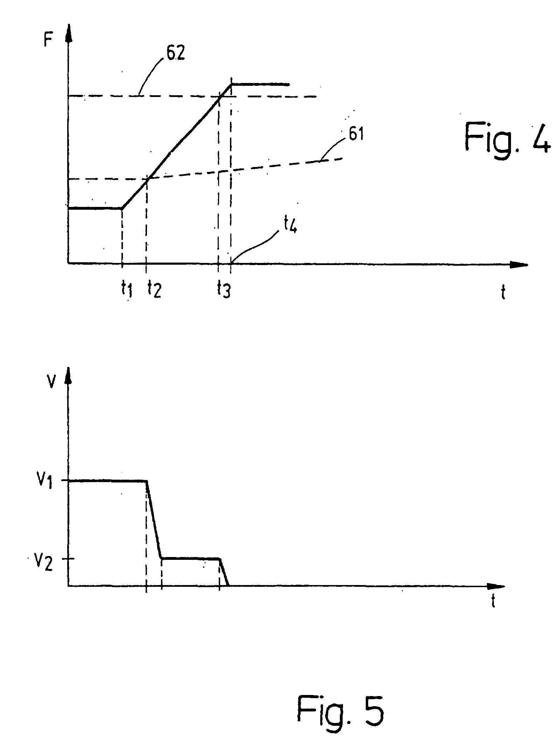

Fig. 4 zeigt den Verlauf der Seilkraft F, aufgetragen über der Zeit t für den Fall, daß sich die Last während des Hebens verhakt. Im gleichen Zeitmaßstab veranschaulicht Fig. 5 die unterschiedlichen Hubgeschwindigkeiten, wobei v₁ der Haupthubgeschwindigkeit und v₂ der Feinhubgeschwindigkeit entspricht. Eine gestrichelte Linie 61 versinnbildlicht den Grenzwert GW, während eine gestrichelte Linie 62 den maximalen Grenzwert von dem 1,3-fachen der Nennlast entspricht. Es sei angenommen, daß bis zum Zeitpunkt t₁ die Last 7 mit der Haupthubgeschwindigkeit v₁ angehoben wird. Im Zeitpunkt t₁ bleibt die Last 7 schlagartig an irgendwelchen ortsfesten Teilen hängen und die von dem Lastsensor 33 gemessene Kraft steigt entsprechend der Nachgiebigkeit des Seils und der Hubgeschwindigkeit mehr oder weniger steil an. Zu einem Zeitpunkt t₂ überschreitet die gemessene Seilkraft den Grenzwert GW, was, wie beschrieben, dazu führt, daß zum Zeitpunkt t₂ der Motor 8 auf die Feinhubgeschwindigkeit v₂ umgeschaltet wird. Durch das Umschalten wird der Motor 8 rapide verzögert.

Wie Fig. 4 ferner erkennen läßt, steigt der Grenzwert GW entsprechend der Linie 61 zufolge der zeitlichen Glättung nur sehr langsam an, nachdem die Last hängengeblieben ist.

Da sich die Last 7 verhakt hat und auch nicht mehr freikommt, steigt die Kraft F bis zum Zeitpunkt t₃ auf einen Wert an, der größer ist als das 1,3-fache der Nennlast. Zu diesem Zeitpunkt wird die Feinhubgeschwindigkeit v₂ ganz ausgeschaltet und der Motor mechanisch bis zum Stillstand gebremst. Da bereits vorher die Umschaltung in die niedrigere Geschwindigkeit v₂ erfolgt ist, braucht die Bremse nur eine sehr geringe kinetische Energie in Wärme umzusetzen. Die Seilkraft F wird folglich nach dem Überschreiten des 1,3-fachen der Nennlast nicht mehr allzu sehr ansteigen.

Da die Lage der Grenzkurve 61 vorteilhafterweise immer um einen geringen Betrag über der Linie liegt, die dem aktuellen Gewicht der Last 7 entspricht, reagiert das System sehr empfindlich, ohne auf kurzfristige Störungen anzusprechen, wie dies bei der Verwendung eines Differentialquotienten der fall wäre. Dennoch ist das System sozusagen selbstjustierend und stellt sich von alleine auf den jeweils erforderlichen Grenzwert ein, bei dem eine Umschaltung in die Feinhubgeschwindigkeit zweckmäßig ist.

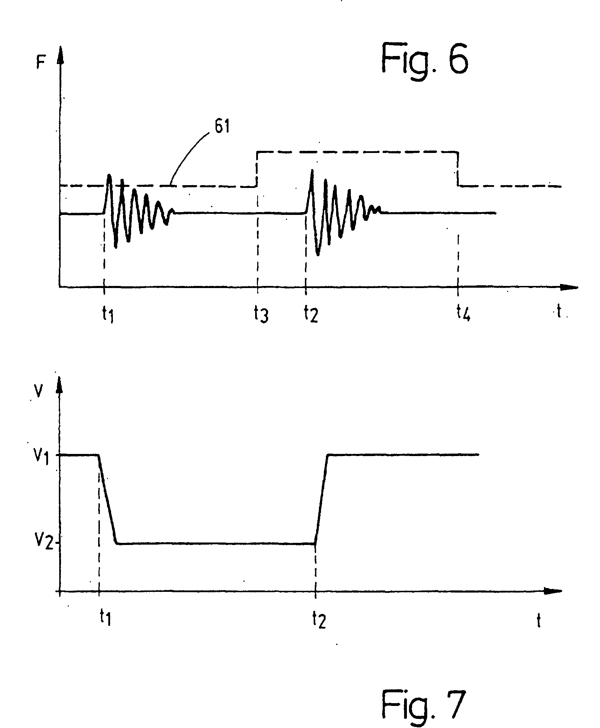

Bei den Diagrammen nach den Fig. 6 und 7 sei angenommen, daß sich die Last nicht verhängt und schlagartig stehen bleibt, sondern daß zum Zeitpunkt t₁ eine Störung auftritt, die zu Vertikalschwingungen der Last 7 führt. Diese Vertikalschwingungen äußern sich als Lastschwingungen an dem Seilkraftsensor 33. Die dadurch erzeugten Kräfte übersteigen kurzfristig unmittelbar nach t₁ den Grenzwert GW entsprechend der Geraden 61. Falls in diesem Zustand das Hebezeug 1 mit der Haupthubgeschwindigkeit v₁ arbeitet, wird zwangsweise in die Feinhubgeschwindigkeit v₂ umgeschaltet. Diese Umschaltung in die Feinhubgeschwindigkeit v₂ dauert so lang, bis die Werte von F den Grenzwert GW nicht mehr übersteigen. Danach beginnt eine Wartezeit zu laufen (Uhr₁), die bis t₂ andauert, ehe das System selbsttätig wieder auf die Haupthubgeschwindigkeit v₁ umschaltet.

Da durch das Umschalten in die Haupthubgeschwindigkeit v₁ erneut Schwingungen angeregt werden, ist es zweckmäßig, wenn zum Zeitpunkt t₃, der zwischen t₁ und t₂ liegt, auf einen größeren Grenzwert GW sprunghaft übergegangen wird, damit die durch das Umschalten angefachten Schwingungen nicht wiederum zum Zurückschalten in die Feinhubgeschwindigkeit führen.

Damit das System möglichst empfindlich bleibt, wird zum Zeitpunkt t₄ wiederum der kleinere Inkrementalwert verwendet, der zu dem gemessenen Wert am Eingang 41 hinzuaddiert wird.

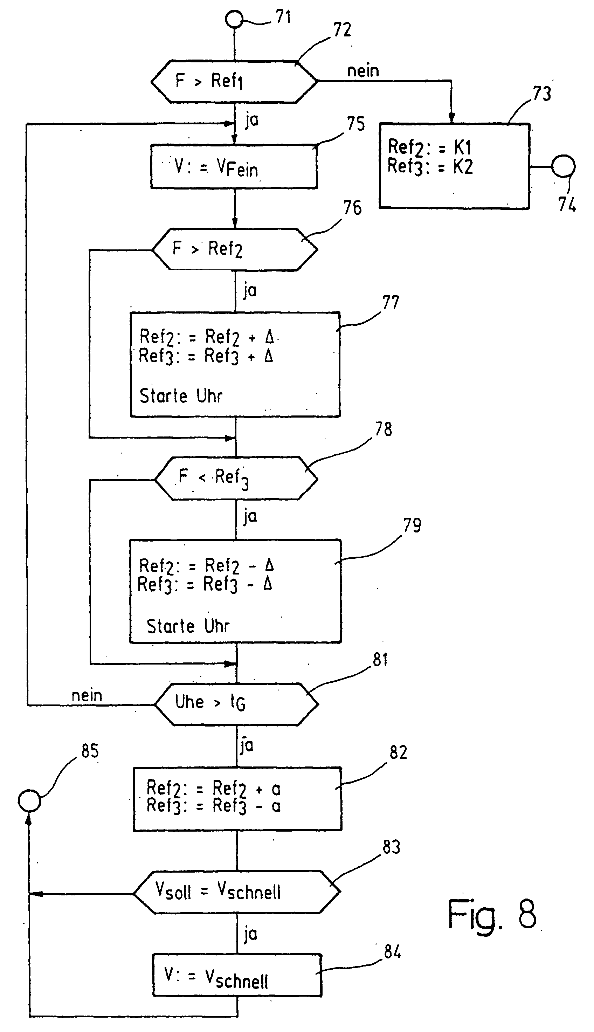

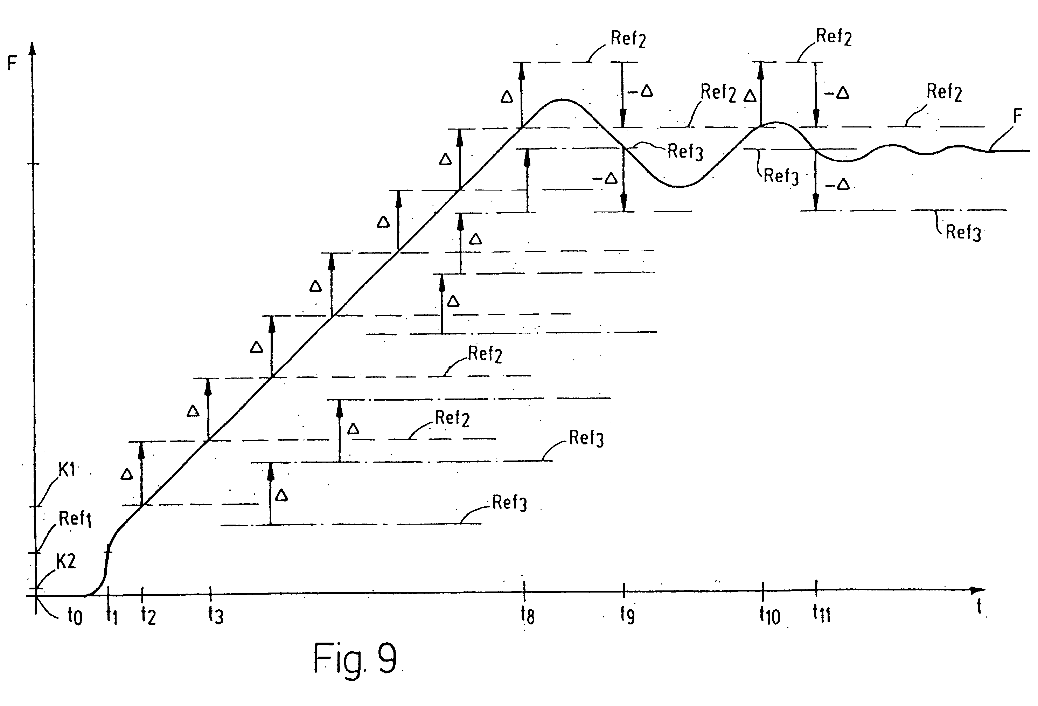

An Hand der Fig. 8 und 9 ist eine andere Möglichkeit gezeigt wie ein Signal erzeugt werden kann, das dem Mittelwertsignal, das die Seilkraft F kennzeichnet, am Ausgang des Tiefpasses 38 entspricht. Der Aufbau der Schaltungsanordnung stimmt mit der Anordnung nach Fig. 2 im wesentlichen überein, wobei jedoch der Tiefpass 38 und der zugehörige Eingang 41 des Mikroprozessors 16 entfallen.

Fig. 8 veranschaulicht in Gestalt eines Flussdiagramms jenen Programmteil, der in dem Mikroprozessor 16 abläuft und dazu dient, die Hakenlast bzw. das Gewicht der angehobenen Last zu ermitteln.

Der in Fig. 8 gezeigte Programmausschnitt wird jeweils lediglich beim ersten Anfahren einer Last durchlaufen, nicht jedoch wenn die bereits schwebende Last angehalten und erneut angefahren wird, gleichgültig ob nach oben oder nach unten.

Das Programm wird jeweils bei 71 aus dem Hauptprogramm erreicht. Sodann wird als nächstes bei 72 abgeprüft, ob das von dem Lastsensor 33 gelieferte Lastsignal F größer ist als ein unterster fester Referenzwert Ref₁. Dieser Referenzwert Ref₁ ist sehr niedrig angesetzt und entspricht dem gerade eben gestrafften Seil 4. Er liegt bei ca. 10 % der Nennlast des Hebezeugs 1. Wenn das Programm feststellt, daß das Lastsignal F unter dem Grenzwert Ref₁ liegt, wird zu einem Anweisungsblock 73 verzweigt, in dem ein oberer variabler Grenzwert Ref₂ und ein unterer variabler Grenzwert Ref₃ auf ihre jeweils untersten Werte K1 und K2 gesetzt werden. Sodann wird das Programmstück gemäß Fig. 7 bei 74 wiederum in Richtung Hauptprogramm verlassen, bis es aus dem Hauptprogramm bei 71 wieder angesprungen wird. Der Antriebsmotor 8 läuft mit der vom Benutzer über den Hängetaster 13 gewählten Geschwindigkeit.

Wird bei der Verzweigungsstelle 72 hingegen festgestellt, daß das Lastsignal F größer ist als der untere Grenzwert Ref₁, wird hieraus auf ein Straffen des Seils 4 geschlossen und der Hebevorgang für die Last 7 beginnt. Um beim Losreißen der Last 7 unnötige Schwingungen im Seil 4 und dem Aufglager für das Hebezeug 1 zu vermeiden und auch im Falle einer Überlast sehr schnell wieder anzuhalten, wird unabhängig von dem über den Hängeschalter 13 eingegebenen Wunsch zur Hebegeschwindigkeit zwangsläufig in einem nachfolgenden Anweisungsblock 75 an die Stromversorgungseinrichtung 17 ein Befehl gegeben, der die Drehzahl des Antriebsmotors 8 auf die Feinhubgeschwindigkeit bzw. niedrigste Hubgeschwindigkeit v_{fein} zurücksetzt. Damit ist sichergestellt, daß nun das weitere Straffen des Seils 4 mit der niedrigsten Geschwindigkeit fortgesetzt wird.

Sodann wird an einer Verzweigungsstelle 76 überprüft, ob das Lastsignal F größer ist als der momentane Wert des oberen variablen Grenzwertes Ref₂. Falls dies zutrifft, werden in einem nachfolgenden Anweisungsblock 77 sowohl der variable obere Grenzwert Ref₂ als auch der variable untere Grenzwert Ref₁ jeweils um einen Inkrementalwert Δ erhöht. Ferner wird eine Uhr auf ihrem Startwert gestartet.

Der Anweisungsblock 77 wird nicht ausgeführt, wenn das Lastsignal kleiner als der obere variable Grenzwert Ref₂ bleibt.

In jedem Falle wird anschließend bei einer Verzweigungsstelle 78 überprüft, ob das Lastsignal F über oder unter dem unteren variablen Grenzwert Ref₃ liegt. Wird der untere Grenzwert unterschritten, werden in dem Anweisungsblock 79 der obere variable Grenzwert Ref₂ und der untere variable Grenzwert Ref₃ um den Inkrementalwert Δ vermindert. Außerdem wird die Uhr auf den Anfangswert zurückgesetzt und neu gestartet.

Das Programm geht anschließend zu einer Verzweigungsstelle 81 weiter, an der geprüft wird, ob die Uhr, weil die Anweisungsblöcke 77 und 79 übersprungen wurden, zwischenzeitlich einen Zeitwert anzeigt, der größer ist als t_{G}. Diese Zeitspanne t_{G} ist etwas größer als die im ungünstigsten Falle zu erwartende Periodendauer der Schwingung der Last 7 an dem Seil 4. Falls dieser zeitliche Grenzwert t_{G} nicht überschritten ist, kehrt das Programm zu dem Eingang des Anweisungsblocks 75 zurück, um erneut die Abprüfungen an den Verzweigungsstellen 76 und 78 vorzunehmen, damit die variablen Grenzwerte Ref₂ und Ref₃ je nachdem korrigiert werden.

Wenn die Prüfung an der Verzweigungsstelle 81 positiv ausfällt, d.h. die Uhr wurde über eine Zeitspanne, die größer ist als t_{G}, nicht zurückgesetzt, wird dies vom Programm dahingehend interpretiert, daß die Seilschwingungen so weit abgeklungen sind, daß die dadurch entstehenden Schwankungen des Lastsignals F innerhalb des Bandes liegen, das nach oben durch den aktuellen Wert des oberen variablen oberen Grenzwertes Ref₂ und nach unten durch den ebenfalls jeweils aktuellen Wert des unteren variablen Grenzwertes Ref₃ eingegrenzt ist.

Da es sein kann, daß beispielsweise der aktuell erreichte Wert des oberen variablen Wert Ref₂ nur knapp über dem wahren Wert des Lastsignals F bei ruhender Last liegt, ist es zweckmäßig, wenn im Anschluss an die Verzweigungsstelle 81 in dem Anweisungsblock 82 anschließend der obere variable Grenzwert Ref₂ um einen festen kleinen Inkrementalwert a vergrößert wird. Der jetzt nach dem Anweisungsblock 82 erreichte obere Grenzwert kann als Referenzwert herangezogen werden, um beim weiteren Betrieb zu entscheiden, ob eine Betriebssituation eingetreten ist, die es ratsam erscheinen läßt, sicherheitshalber in die niedrige Drehzahl umzuschalten.

Für den Fall, daß auch der untere Grenzwert verwertet wird, um übermäßige Schwingungen zu erkennen, die ein Umschalten der Betriebsweise des Hebezeugs angeraten erscheinen lassen, beispielsweise weil durch Tippbetrieb sehr große Schwingungsamplituden entstanden sind, kann auch der untere variable Grenzwert Ref₃ um ein kleines Inkrement a vermindert werden, damit unter ungünstigen Bedingungen ein hinreichender Abstand zu dem Ruhezustand des Lastsignals F erreicht wird.

Wenn der Anweisungsblock 82 erreicht ist, steht fest, daß die Last 7 frei am Haken pendelt, so daß jetzt, wenn keine anderen Bedingungen vorliegen, die ein Umschalten in die höhere Geschwindigkeit verbieten, in die vom Benutzer gewünschte Geschwindigkeit hochgeschaltet werden kann. Dazu wird an einer Verzweigungsstelle 83 geprüft, ob die von dem Benutzer gewünschte Sollhubgeschwindigkeit vₛₒₗₗ gleich der schnellen Hubgeschwindigkeit v_{schnell} ist. Falls ja, wird in einem Anweisungsblock 84 die Hubgeschwindigkeit V auf die schnelle Hubgeschwindigkeit v_{schnell} umgeschaltet. Nach Verlassen des Anweisungsblocks 83 oder im Falle eines negativen Ausgangs der Abprüfung an der Verzweigungsstelle 83 wird der Programmteil bei 85 ins Hauptprogramm verlassen.

Der gezeigte Programmabschnitt zeigt die für das Verständnis wesentlichen Teile. Eventuell erforderliche Warteschleifen und auch die Abprüfung auf Überschreiten der Überlastgrenze wurden der Übersichtlichkeit halber weggelassen.

Anhand von Fig. 9 wird nachfolgend das Verhalten des Programms erläutert:

Es sei angenommen, daß zum Zeitpunkt t₀ die Last 7 am schlaffen Seil 4 angehängt ist und der Benutzer über die Taste 14 die schnelle Hubgeschwindigkeit v_{schnell} des Seilzugs 1 anfordert. Das Seil 4 wird sehr rasch straffgezogen und anschließend mit einem steilen Gradienten gespannt.

Zum Zeitpunkt t₁ überschreitet das von dem Lastsensor 63 gelieferte Lastsignal F den unteren festen Grenzwert Ref₁, was als Anzeichen dafür gewertet wird, daß sich in dem Seil 4 eine hinreichende Spannung aufgebaut hat und ein weiterer Betrieb mit der schnellen Haupthubgeschwindigkeit nicht zweckmäßig ist. Zum Zeitpunkt t₁ schaltet die Steuerschaltung 9 deswegen die Stromversorgungseinrichtung 17 um, damit anschließend der Motor 8 nur noch mit der langsamen Feinhubgeschwindigkeit v_{fein} arbeitet.

Da vorher die Bedingung F < Ref₁ nicht erfüllt war, waren jeweils die beiden variablen Grenzwerte Ref₁ und Ref₂ auf ihre Anfangswerte K1 und K2 zurückgesetzt. Wegen des Zurückschaltens in die langsame Geschwindigkeit wird ab dem Zeitpunkt t₁ das Lastsignal F weniger steil ansteigen.

Zum Zeitpunkt t₂ wird das Lastsignal F zum ersten Mal größer werden als der noch auf seinem Startwert sitzende obere variable Grenzwert Ref₂, der daraufhin zum Zeitpunkt t₂ um Δ erhöht wird ebenso wie der untere variable Grenzwert Ref₂. Dieser Vorgang des Übersteigens von Ref₂ und der Erhöhung von Ref₂ und Ref₃ wird sich bis zum Zeitpunkt t₈ mehrfach wiederholen. Solange wird das Programm den Anweisungsblock 77 ausführen, jedoch den Anweisungsblock 79 überspringen. Gleichzeitig wird immer wieder die Uhr auf den Anfangswert zurückgesetzt.

was die Steuerschaltung 9 jetzt noch nicht wissen kann, sich aber aus dem weiteren Verlauf des Lastsignals F ergibt, war hier bereits eine Situation eingetreten, in der die Last 7 vom Boden abgehoben hatte und eine Seilschwingung induziert wurde. Dementsprechend fällt zum Zeitpunkt t₉ die Überprüfung bei 76 negativ aus, d.h. der Anweisungsblock 77 wird übersprungen. Hingegen ist die Überprüfung beim Anweisungsblock 78 positiv, denn das Lastsignal F wird jetzt erstmalig kleiner als der synchron mit dem variablen oberen Grenzwert Ref₂ mit nach oben verstellte untere Grenzwert Ref₃. Deswegen wird der Anweisungsblock 79 ausgeführt und es wird sowohl der untere variable Grenzwert Ref₃ als auch der obere variable Grenzwert Ref₂ wiederum um Δ vermindert. Das führt dazu, daß im weiteren Verlauf das Lastsignal F zwar nicht mehr den aktuell eingestellten Wert des variablen unteren Grenzwertes Ref₃ unterschreitet, dafür aber zum Zeitpunkt t₁₀ den gegenüber zum Zeitpunkt t₈ verminderten oberen variablen Grenzwert Ref₂. Im Programm hat das zur Folge, daß nicht mehr der Anweisungsblock 79, sondern wiederum der Anweisungsblock 77 ausgeführt wird. Bei dem gewählten Verlauf von F führt dies dazu, daß der obere variable Grenzwert Ref₂ erneut auf den Wert eingestellt wird, den er zum Zeitpunkt t₈ bereits einmal hatte. Das gleiche gilt für den unteren variablen Grenzwert Ref₃.

Da die Schwingung noch nicht hinreichend abgeklungen ist, wird auch zum Zeitpunkt t₁₁ erneut der untere variable Grenzwert Ref₃ unterschritten, mit der Folge, daß die beiden variablen Grenzwerte Ref₂ und Ref₃ wiederum um Δ im Anweisungsblock 79 vermindert werden.

Nach dem Zeitpunkt t₁₁ bleibt der Wert von F trotz der noch vorhandenen Schwingungen kleiner als der inzwischen nachgeführte obere variable Grenzwert Ref₂ und außerdem bleibt F großer als der aktuelle Wert des unteren variablen Grenzwertes Ref₃. Die Folge ist, daß die Uhr nicht mehr zurückgesetzt wird und die Schleife zwischen dem Anweisungsblock 75 und dem Anweisungsblock 82 nicht mehr durchlaufen wird, solange bis F wieder kleiner wird als der Referenzwert Ref₁ was dem Absetzen der Last 7 entspricht.

Ersichtlicherweise ist der obere variable Grenzwert Ref₂ praktisch gleichzeitig mit dem hinreichenden Abklingen der Seilschwingungen nach dem Anheben der Last 7 einjustiert. Er kann für die weitere Überwachung beim Handling der Last in der gleichen Weise verwendet werden wie der am Ausgang des Tiefpasses 38 erhaltene Mittelwert. D.h. im Anweisungsblock 46 nach Fig. 3 wird nur der Eingang 36 abgefragt und im Anweisungsblock 47 wird der Grenzwert GW berechnet zu Ref₂+Δ.

Wie genau der obere variable Grenzwert Ref₂ mit dem wahren Gewicht F übereinstimmt, hängt davon ab, wie groß der Abstand zwischen den beiden variablen Grenzwerten Ref₂ und Ref₃ gewählt ist. Je kleiner die Bandbreite ist, umso genauer stimmt der obere variablen Grenzwerte Ref₂ mit dem wahren Signal F überein. In der Praxis hat sich herausgestellt, daß ein Abstand zwischen den beiden variablen Grenzwerten Ref₂ und Ref₃ von ca. 3-4% der Nennlast eine sehr genaue Messung ermöglicht.

Eine Steuerung für ein Hebezeug erzeugt einen gleitenden Referenzwert, mit dem die Seilkraft ständig verglichen wird. Dieser Referenzwert liegt jeweils wenig über der aktuellen Seilkraft, die dem Gewicht der ruhig an dem Seil hängenden Last entspricht. Dieser Wert wird durch Integration bzw. Filterung aus dem tatsächlichen Seilkraftsignal erzeugt. Durch Vergleich des aktuellen Seilkraftsignals mit dem durch Filterung erhaltenen geglätteten oder verzögerten Signal wird entschieden, ob es zweckmäßig ist, das Hebezeug sicherheitshalber in die Feinhubgeschwindigkeit umzuschalten, für den Fall, daß das Überschreiten dieses Grenzwertes ein erstes Anzeichen für ein Hängenbleiben einer Last ist. Da bei jeder beliebigen Last ein eigener Grenzwert selbsttätig erzeugt wird, ist das System unabhängig von dem Gewicht der Last immer gleich empfindlich und arbeitet nicht nur während des Anhebevorgangs der Last von der Unterlage. Außerdem eignet sich die Anordnung dazu, Vertikalschwingungen der Last schnell und irrtumsfrei zu erkennen.

## Patentansprüche

1. Antriebs- und Steuersystem (8,9) für ein ein Lastaufnahmemittel (5) aufweisendes Hebezeug (1),
mit einem Antriebsmotor (8) zum Bewegen des Lastaufnahmemittels (5), der mit wenigstens zwei unterschiedlichen Drehzahlen (v₁,v₂) betreibbar ist und der beim Umschalten aus der höheren Drehzahl (v₁) in die niedrigere Drehzahl (v₂) elektrisch gebremst wird,
mit einer Stromversorgungseinrichtung (17) für den Antriebsmotor (8), durch die der Antriebsmotor (8) mit den unterschiedlichen Drehzahlen (v₁,v₂) in Gang zu setzen oder abzuschalten ist und die Steuereingänge (21) aufweist,
mit einer Sensoreinrichtung (33), um die an dem Lastaufnahmenmittel (5) wirkende Kraft zu erfassen und ein die Größe der Kraft kennzeichnendes Signal (34) abzugeben,
mit einer Eingabeeinrichtung (13) zum Eingeben einer Sollhubgeschwindigkeit und
mit einer an die Eingabeeinrichtung (13) angeschlossenen Steuerschaltung (9),
in die das Signal aus der Sensoreinrichtung (33) eingespeist wird,
die Steuersignale an die Steuereingänge (21) der Stromversorgungseinrichtung (17) abgibt und
die ein Steuerprogramm enthält, das derart gestaltet ist, daß
es das die Größe der Kraft kennzeichnende Signal (35) mit wenigstens einem einer Überlast entsprechenden ersten Grenzwert (GW) vergleicht, dessen Größe von dem Gewicht der Last abhängig ist und
beim Überschreiten des ersten Grenzwertes (GW) die Stromversorgungseinrichtung (17) zunächst in den Zustand für der niedrigere Drehzahl (v₂) schaltet, wenn dieser Zustand noch nicht eingeschaltet ist.

2. Antriebs- und Steuersystem nach Anspruch 1, **dadurch gekennzeichnet, daß** das Steuerprogramm derart gestaltet ist, daß es beim Überschreiten eines zweiten Grenzwertes (62) die Stromversorgungseinrichtung (17) in den Zustand für stillstehenden Antriebsmotor (8) umschaltet.

3. Antriebs- und Steuersystem nach Anspruch 1, **dadurch gekennzeichnet, daß** der erste Grenzwert (GW) einen Wert enthält, der für einen Mittelwert der Seilkraft kennzeichnend ist.

4. Antriebs- und Steuesystem nach Anspruch 3, **dadurch gekennzeichnet, daß** Mittelwert der Seilkraft aus dem von der Sensoreinrichtung (33) erhaltenen Signal abgeleitet ist.

5. Antriebs- und Steuesystem nach Anspruch 3, **dadurch gekennzeichnet, daß** Mittelwert der Seilkraft aus dem von der Sensoreinrichtung (33) erhaltenen Signal durch Integration über der Zeit abgeleitet ist.

6. Antriebs- und Steuesystem nach Anspruch 3, **dadurch gekennzeichnet, daß** Mittelwert der Seilkraft aus dem von der Sensoreinrichtung (33) erhaltenen Signal durch Mitführen beim Abheben der jeweiligen Last (7) von der Unterlage bestimmt wird.

7. Antriebs- und Steuersystem nach Anspruch 1, **dadurch gekennzeichnet, daß** der erste Grenzwert (GW) die Summe aus einem Inkrementalwert (Δ) und dem Wert enthält, der für ein zeitlich geglättetes Signal kennzeichnend ist, das von der Sensoreinrichtung (33) erhalten oder aus dem von der Sensoreinrichtung (33) erhaltenen Signal (35) abgeleitet ist.

8. Antriebs- und Steuersystem nach Anspruch 1, **dadurch gekennzeichnet, daß** der Inkrementalwert (Δ) abhängig von dem Umschalten in die niedrigere Drehzahl (v₂) und der Zeit ist.

9. Antriebs- und Steuersystem nach Anspruch 1, **dadurch gekennzeichnet, daß** der Inkrementalwert (Δ) nach dem Umschalten in die niedrigere Drehzahl (v₂) für eine festgelegte Zeitspanne einen höheren Wert aufweist und anschließend auf einen niedrigeren Ausgangswert zurückkehrt.

10. Antriebs- und Steuersystem nach Anspruch 1, **dadurch gekennzeichnet, daß** der zweite Grenzwert (62) einer Last von 110% bis 140%, vorzugsweise einer Last von um 130% der Nennlast des Hebezeugs (1) entspricht.

11. Antriebs- und Steuersystem nach Anspruch 1, **dadurch gekennzeichnet, daß** der Inkremantalwert (Δ) einem Wert von zwischen 2% und 10% der Nennlast des Hebezeugs (1), vorzugsweise einer Last von um 5% der Nennlast entspricht.

12. Antriebs- und Steuersystem nach Anspruch 1, **dadurch gekennzeichnet, daß** das Hebezeug (1) zusätzlich mit einer Bremse (25) versehen ist, deren Betätigung von dem Antriebsmotor (8) mechanisch unabhängig ist.

13. Antriebs- und Steuersystem nach Anspruch 10, **dadurch gekennzeichnet, daß** die Bremse (25) gleichzeitig mit dem beim Überschreiten des zweiten Grenzwertes (62) mit dem Umschalten der Stromversorgungseinrichtung (17) in den Zustand für die niedrige Drehzahl (v₂) des Antriebsmotor (8) aktiviert wird.

14. Antriebs- und Steuersystem nach Anspruch 1, **dadurch gekennzeichnet, daß** die Zeitkonstante, mit der das geglättete Signal erzeugt wird, zwischen 0.05 sek. und 0,5 sek. liegt.

15. Antriebs- und Steuersystem nach Anspruch 1, **dadurch gekennzeichnet, daß** eine Zeitmeßeinrichtung (Uhr₁) vorhanden ist, die die Zeit erfaßt, die seit dem Umschalten der Stromversorgungseinrichtung (17) in den Zustand für die niedrige Drehzahl (v₂) durch die Steuerschaltung (9) vergangen ist.

16. Antriebs- und Steuersystem nach Anspruch 1, **dadurch gekennzeichnet, daß** die Steuerschaltung (9) derart gestaltet ist, daß sie die Zeitmeßeinrichtung (Uhr₁) abfragt und nach einer festgelegten Zeitgrenze gemessen seit dem Umschalten der Stromversorgungseinrichtung (17) in den Zustand für die niedrige Drehzahl (v₂) durch die Steuerschaltung (9), die Stromversorgungseinrichtung (17) in den Zustand für die hohe Drehzahl (v₁) zurückschaltet, wenn über die Eingabeeinrichtung (13) die hohe Drehzahl (v₁) weiterhin angefordert wird.

17. Antrieb- und Steuersystem nach Anspruch 1, **dadurch gekennzeichnet, daß** die Große des ersten Grenzwertes (GW) von dem Gewicht der Last und einen Ereignis abhängig ist.

## Claims

1. Drive and control system (8, 9) for a hoist (1) having a load receiving means (5),
with a drive motor (8) to move the load receiving means (5), which can be operated at at least two different rotational speeds (v₁/v₂) and is electrically braked during switchover from the higher speed (v₁) to the lower speed (v₂),
with a power supply means (17) for the drive motor (8), by means of which the drive motor (8) can be set in motion at the different speeds (v₁/v₂) or switched off, and which has control inputs (21),
with a sensor means (33) in order to detect the force acting on the load receiving means (5) and to emit a signal (34) identifying the magnitude of the force,
with an input means (13) for the input of a rated stroke speed and
with a control circuit (9) connected to the input means (13),
into which the signal from the sensor means (33) is fed,
which emits control signals to the control inputs (21) of the power supply means (17), and
which includes a control program configured in such a manner that
it compares the signal (35) identifying the magnitude of the force with at least a first limit value (GW) corresponding to an overload, the magnitude of said limit value being dependent on the weight of the load and
when the first limit value (GW) is exceeded, firstly switches the power supply means (17) into the status for the lower speed (v₂), if this status is not yet switched on.

2. Drive and control system according to Claim 1, **characterised in that** the control program is configured in such a manner that when a second limit value (62) is exceeded, it switches the power supply means (17) over into the status for idle drive motor (8).

3. Drive and control system according to Claim 1, **characterised in that** the first limit value (GW) includes a value which is characteristic for a mean value of the cable strength.

4. Drive and control system according to Claim 3, **characterised in that** the mean value of the cable strength is derived from the signal received from the sensor means (33).

5. Drive and control system according to Claim 3, **characterised in that** the mean value of the cable strength is derived from the signal received from the sensor means (33) by integration over time.

6. Drive and control system according to Claim 3, **characterised in that** the mean value of the cable strength is determined from the signal received from the sensor means (33) by entrainment on raising the respective load (7) from the support.

7. Drive and control system according to Claim 1, **characterised in that** the first limit value (GW) comprises the sum of an incremental value (Δ) and the value which is characteristic for a signal smoothed over time received from the sensor means (33) or derived from the signal (35) received from the sensor means (33).

8. Drive and control system according to Claim 1, **characterised in that** the incremental value (Δ) is dependent on the switchover to the lower speed (v₂) and on time.

9. Drive and control system according to Claim 1, **characterised in that** after the switchover to the lower speed (v₂), the incremental value (Δ) has a higher value for a fixed time span and subsequently returns to a lower initial value.

10. Drive and control system according to Claim 1, **characterised in that** the second limit value (62) corresponds to a load of 110% to 140%, preferably a load of about 130%, of the nominal load of the hoist (1).

11. Drive and control system according to Claim 1, **characterised in that** the incremental value (Δ) corresponds to a load of between 2% and 10% of the nominal load of the hoist (1), preferably a load of about 5% of the nominal load.

12. Drive and control system according to Claim 1, **characterised in that** the hoist (1) is additionally provided with a brake (25), the operation of which is mechanically independent of the drive motor (8).

13. Drive and control system according to Claim 10, **characterised in that** when the second limit value (62) is exceeded the brake (25) is simultaneously activated with the switchover of the power supply means (17) to the status for low speed (v₂) of the drive motor (8).

14. Drive and control system according to Claim 1, **characterised in that** the time constant, at which the smoothed signal is generated, lies between 0.05 sec. and 0.5 sec.

15. Drive and control system according to Claim 1, **characterised in that** a time measurement means (clock₁) is provided, which detects the time which has passed since the switchover of the power supply means (17) to the status for low speed (v₂) by the control circuit (9).

16. Drive and control system according to Claim 1, **characterised in that** the control circuit (9) is configured in such a manner that it scans the time measurement means (clock₁) and after a fixed time limit measured since the switchover of the power supply means (17) into the status for low speed (v₂) by the control circuit (9), switches the power supply means (17) back to the status for high speed (v₁), if high speed (v₁) continues to be required via the input means (13).

17. Drive and control system according to Claim 1, **characterised in that** the magnitude of the first limit value (GW) is dependent on the weight of the load and an event.

## Revendications

1. Système d'entraînement et de commande (8, 9) pour un engin de levage (1) comportant un moyen de réception de charge (5), avec un moteur d'entraînement (8) pour déplacer le moyen de réception de charge (5), qui peut fonctionner avec au moins deux vitesses de rotation (v₁, v₂) différentes et qui, lors du passage de la vitesse de rotation supérieure (v₁) à la vitesse de rotation inférieure (v₂), est freiné électriquement,
avec un dispositif d'alimentation en courant électrique (17) pour le moteur d'entraînement (8), par lequel le moteur d'entraînement (8) peut être mis en marche avec différentes vitesses de rotation (v₁, v₂), ou arrêté, et qui présente des entrées de commande (21),
avec un système de capteurs (33) pour mesurer la force agissant sur le moyen de réception de charge (5) et délivrer un signal (34) caractérisant la grandeur de la force,
avec un dispositif d'entrée (13), pour entrer une vitesse de levage de consigne et
avec un circuit de commande (9) connecté au dispositif d'entrée (13),
dans lequel le signal du système de capteurs (33) est introduit, qui délivre des signaux de commande aux entrées de commande (21) du dispositif d'alimentation en courant (17) et
qui contient un programme de commande agencé de telle sorte
qu'il compare le signal (35) caractérisant la grandeur de la force à au moins une première valeur seuil (GW) correspondant à une surcharge, la grandeur de la valeur seuil étant dépendante du poids de la charge, et
en cas de dépassement de la première valeur seuil (GW), dans un premier temps, commute le dispositif d'alimentation en courant électrique (17) dans l'état pour la vitesse de rotation (v₂) inférieure, dans la mesure où cet état n'est pas déjà sélectionné.

2. Système d'entraînement et de commande selon la revendication 1, **caractérisé en ce que** le programme de commande est agencé de telle sorte qu'en cas de dépassement d'une deuxième valeur seuil (62), il commute le dispositif d'alimentation en courant électrique (17) dans l'état pour l'arrêt du moteur d'entraînement (8).

3. Système d'entraînement et de commande selon la revendication 1, **caractérisé en ce que** la première valeur seuil (GW) contient une valeur qui est caractéristique pour une valeur moyenne de la force du câble.

4. Système d'entraînement et de commande selon la revendication 3, **caractérisé en ce que** la valeur moyenne de la force du câble est dérivée du signal provenant du système de capteurs (33).

5. Système d'entraînement et de commande selon la revendication 3, **caractérisé en ce que** la valeur moyenne de la force du câble est dérivée par intégration sur le temps du signal provenant du système de capteurs (33).

6. Système d'entraînement et de commande selon la revendication 3, **caractérisé en ce que** la valeur moyenne de la force du câble est déterminée à partir du signal provenant du système de capteurs (33), par entraînement direct lors du décollement de la charge (7) de son support.

7. Système d'entraînement et de commande selon la revendication 1, **caractérisé en ce que** la première valeur seuil (GW) contient la somme d'une valeur incrémentale (Δ) et de la valeur caractéristique pour un signal lissé dans le temps qui est délivré par le système de capteurs (33) ou est dérivé du signal (35) délivré par le système de capteurs (33).

8. Système d'entraînement et de commande selon la revendication 1, **caractérisé en ce que** la valeur incrémentale (Δ) est dépendante de la commutation de la vitesse de rotation inférieure (v₂) et du temps.

9. Système d'entraînement et de commande selon la revendication 1, **caractérisé en ce que** la valeur incrémentale (Δ), consécutivement à la commutation de la vitesse de rotation inférieure (v₂), présente une valeur plus élevée pendant un laps de temps déterminé, puis revient à une valeur de sortie plus faible.

10. Système d'entraînement et de commande selon la revendication 1, **caractérisé en ce que** la deuxième valeur seuil (62) correspond à une charge de 110% à 140%, de préférence à une charge d'environ 130% de la charge nominale de l'engin de levage (1).

11. Système d'entraînement et de commande selon la revendication 1, **caractérisé en ce que** la valeur incrémentale (Δ) correspond à une valeur comprise entre 2% et 10% de la charge nominale de l'engin de levage (1), de préférence à une charge d'environ 5% de la charge nominale.

12. Système d'entraînement et de commande selon la revendication 1, **caractérisé en ce que** l'engin de levage (1) est pourvu en outre d'un frein (25) dont l'actionnement est indépendant du moteur d'entraînement (8) sur le plan mécanique.

13. Système d'entraînement et de commande selon la revendication 10, **caractérisé en ce que** le frein (25) est activé simultanément avec la commutation du dispositif d'alimentation en courant (17) dans l'état pour la vitesse de rotation inférieure (v₂) du moteur d'entraînement lors du dépassement de la deuxième valeur seuil (62).

14. Système d'entraînement et de commande selon la revendication 1, **caractérisé en ce que** la constante de temps avec laquelle le signal lissé est produit est comprise entre 0,05 sec et 0,5 sec.

15. Système d'entraînement et de commande selon la revendication 1, **caractérisé en ce qu'**il est prévu un dispositif de mesure de temps (Uhr₁), qui mesure le temps écoulé depuis la commutation du dispositif d'alimentation en courant (17) dans l'état pour la vitesse de rotation inférieure (v₂) par le circuit de commande (9).

16. Système d'entraînement et de commande selon la revendication 1, **caractérisé en ce que** le circuit de commande (9) est agencé de telle sorte qu'il interroge le dispositif de mesure de temps (Uhr₁) et après un laps de temps déterminé mesuré à partir de l'instant de commutation du dispositif d'alimentation en courant (17) dans l'état pour la vitesse de rotation inférieure (v₂) par le circuit de commande (9), ramène le dispositif d'alimentation en courant (17) dans l'état pour la vitesse de rotation supérieure (v₁) lorsque la vitesse supérieure (v₁) est exigée par le dispositif d'entrée (13).

17. Système d'entraînement et de commande selon la revendication 1, **caractérisé en ce que** la grandeur de la première valeur seuil (GW) est dépendante du poids de la charge et d'une condition supplémentaire.
